(19) Europäisches Patentamt

European Patent Office

Office européen des brevets

(11) Numéro de publication : **0 056 666**
**B1**

# (12) FASCICULE DE BREVET EUROPÉEN

(45) Date de publication du fascicule du brevet :
09.10.85

(21) Numéro de dépôt : 82200017.0

(22) Date de dépôt : 08.01.82

(51) Int. Cl.⁴ : **B 29 C 47/38**

(54) **Dispositif d'extrusion à vis de matières thermoplastiques.**

(30) Priorité : 15.01.81 FR 8100848

(43) Date de publication de la demande :
28.07.82 Bulletin 82/30

(45) Mention de la délivrance du brevet :
09.10.85 Bulletin 85/41

(84) États contractants désignés :
**BE DE FR GB IT NL**

(56) Documents cités :
DE-A- 1 629 734
DE-A- 1 959 348
DE-A- 2 350 249

(73) Titulaire : **SOLVAY & Cie (Société Anonyme)**
**Rue du Prince Albert, 33**
**B-1050 Bruxelles (BE)**

(72) Inventeur : **Dehennau, Claude**
**Chemin des Postes, 236**
**B-1410 Waterloo (BE)**
Inventeur : **Van Rijckevorsel, Jacques**
**Chaussée de Louvain, 67**
**B-1410 Waterloo (BE)**

Jouve, 18, rue St-Denis, 75001 Paris, France

EP 0 056 666 B1

## Description

L'invention concerne un dispositif d'extrusion à vis de matières thermoplastiques permettant l'élimination de la formation de dépôts sur l'extrémité de la vis d'extrusion.

Lors de la mise en œuvre des matières thermoplastiques et en particulier, des résines vinyliques par la technique d'extrusion, on constate souvent la formation de dépôts collants sur l'extrémité de la vis d'extrusion, ce phénomène étant généralement désigné par l'expression « plate out ».

Le phénomène de « plate out » se manifeste généralement par l'apparition de traînées sur le produit extrudé qui nuisent à son aspect esthétique et qui influencent défavorablement ses propriétés mécaniques. L'apparition du phénomène de « plate out » pose un problème très difficile à résoudre car les facteurs et les conditions qui le régissent sont jusqu'à présent mal connus et on ne connaît pas de procédure spécifique pour le faire disparaître. On pense, en particulier, que des incompatibilités entre les différents additifs de la résine extrudée de même que les conditions d'extrusion peuvent être partiellement responsables de l'apparition de ce phénomène (Encyclopedia of PVC, L.I.NASS Marcel Dekker, New York 1976, vol. 1, p. 345-346).

Dès lors, lorsque ce phénomène se présente, le spécialiste ne peut qu'essayer de l'éliminer par des moyens empiriques tels que des modifications des paramètres régissant l'extrusion, ou par des moyens plus radicaux tels que le changement de la formule de la résine mise en œuvre, ce qui occasionne toujours des tâtonnements et des pertes de production.

La présente invention vise à procurer un dispositif d'extrusion à vis de matières thermoplastiques qui permet de faire disparaître efficacement, simplement et rapidement la formation de dépôts sur l'extrémité de la vis d'extrusion et partant de vaincre le phénomène de « plate out ».

A cet effet, l'invention concerne un dispositif d'extrusion à vis de matières thermoplastiques comportant une plaque à trous pourvue d'un évidement central disposée concentriquement autour de la vis et déplaçable axialement par rapport à la vis dans lequel la plaque à trous est disposée au niveau de la pointe conique de la vis d'extrusion et ménage un canal annulaire entre l'évidement central de la plaque à trou et la pointe conique de la vis.

Dans le document DE-A-2 350 249, on a déjà décrit un dispositif d'extrusion comportant une vis d'extrusion et une plaque comportant un évidement central disposée concentriquement au niveau de l'extrémité de la vis d'extrusion, ladite plaque étant en outre déplaçable axialement par rapport à l'axe de la vis d'extrusion. Toutefois, dans ce dispositif la plaque ne comporte pas d'autre ouverture que l'évidement central et l'extrémité de la vis d'extrusion est tronconique. De ce fait, ce dispositif ne peut convenir pour l'extrusion de matières plastiques ayant tendance à provoquer des phénomènes de « plate out ».

Par contre dans le dispositif conforme à l'invention la pointe de la vis à la forme générale d'un cône d'angle compris entre 20 et 160 degrés.

Dans le dispositif conforme à l'invention, la plaque à trous présente un évidement central tronconique permettant le passage de la pointe de la vis d'extrusion et une couronne de trous. La paroi interne de l'évidement central de la plaque à trous peut être parallèle à la paroi de la pointe de la vis d'extrusion ou encore être convergente ou divergente par rapport à cette paroi. De préférence, elle est convergente vers la pointe de la vis. L'angle de convergence c'est-à-dire l'angle formé par la paroi interne de la plaque à trous et l'axe de la vis, est compris dans ce cas de préférence entre 10 et 85 degrés.

Dans un mode de réalisation préféré, la plaque à trous est équipée de moyens tels qu'une commande par vis micrométrique permettant son déplacement axial en cours d'extrusion.

De préférence, la plaque à trous est déplaçable depuis une position où l'extrémité de la pointe de la vis d'extrusion affleure la face aval de la plaque à trous et une position où cette pointe émerge de la face aval de la plaque à trous d'une distance axiale maximale égale au rayon de l'évidement central de la plaque à trous multiplié par la cotangente du demi-angle au sommet du cône formé par la pointe de la vis.

Le nombre de trous en couronne de la plaque à trous est quelconque et ceux-ci peuvent être disposés sous la forme d'une ou de plusieurs couronnes concentriques à l'axe de la vis d'extrusion. Le profil et la section de ces trous sont également quelconques. En général, ils sont cylindriques. Leurs axes longitudinaux peuvent être dirigés parallèlement à la paroi de la pointe de la vis d'extrusion ou être convergents ou divergents par rapport à cette paroi. De préférence, ils sont divergents vers la pointe de la vis.

Les dimensions et l'angle de l'évidement central de la plaque à trous sont de préférence tels que, quelle que soit la position occupée par cette plaque, la section minimale de passage pour la matière extrudée entre la paroi externe de la pointe de la vis et la paroi interne de cet évidement central soit comprise entre 5 et 300 % et de préférence entre 10 et 200 % de la section minimale de passage assurée par l'ensemble des trous de la plaque à trous.

Le dispositif conforme à l'invention peut aussi être adapté de façon à pouvoir être exploité sur des extrudeuses à double vis, dans ce cas la partie centrale de la plaque à trous présente deux évidements permettant chacun le passage d'une pointe de vis d'extrusion.

Par ailleurs, le dispositif conforme à l'invention peut être équipé en aval d'une filière plate ou d'une filière pour profilés creux ou pleins de section quelconque.

Lorsqu'au cours d'une extrusion de matière thermoplastique au moyen d'un dispositif d'extrusion conforme à l'invention, l'opérateur constate l'apparition de défauts dans le produit extrudé, il peut, en cours d'extrusion, modifier la position axiale de la plaque à trous et ainsi déterminer une position idéale pour laquelle il constate la disparition du phénomène indésiré. De fait, cette position optimale de la plaque à trous varie en fonction des compositions extrudées et en fonction des paramètres régissant l'extrusion et elle doit donc être déterminée expérimentalement pour chaque composition extrudée et chaque ensemble de conditions d'extrusion. Toutefois, dès que cette position idéale a été déterminée une première fois pour chaque composition habituellement mise en œuvre l'opérateur peut relever la position de la plaque à trous et les autres paramètres d'extrusion et les utiliser à nouveau ultérieurement avec éventuellement de légères corrections si celles-ci s'avèrent nécessaires.

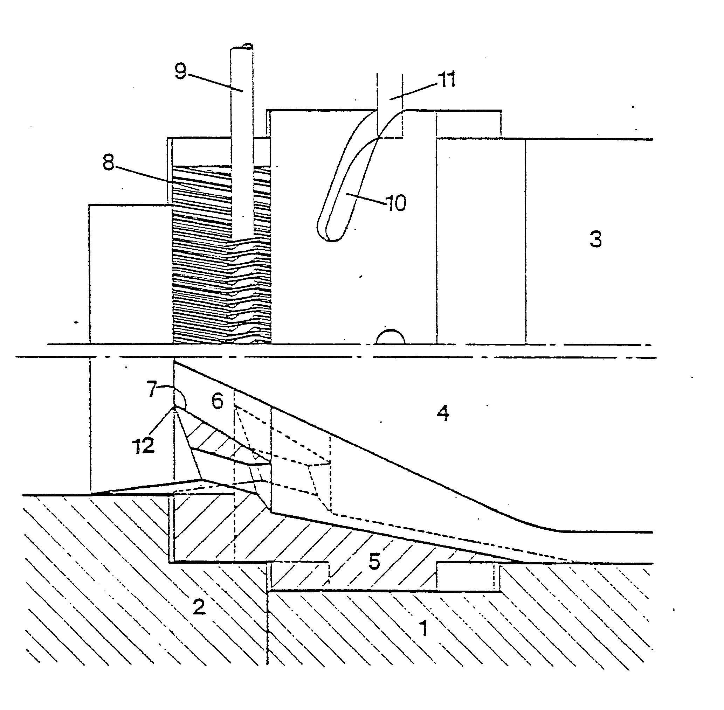

Le dispositif d'extrusion conforme à l'invention est par ailleurs explicité plus en détail dans la description d'une variante de réalisation donnée ci-après à titre purement illustratif et dans laquelle on se référera à la figure unique du dessin annexé.

Dans cette figure unique, on a représenté partiellement dans la partie supérieure un dispositif d'extrusion conforme à l'invention vu en élévation et dans la partie inférieure ce même dispositif vu en coupe médiane.

Le dispositif d'extrusion représenté comporte un fourreau 1, une tête d'extrusion 2 et une vis d'extrusion 3 comportant une pointe conique 4, ces trois éléments conventionnels étant représentés partiellement.

Le dispositif comporte en outre, conformément à l'invention une plaque à trous déplaçable axialement 5 disposée concentriquement autour de la pointe 4 de la vis d'extrusion 3. La plaque à trous 5 présente un évidement central 6 dont la paroi interne 7 converge sous un angle de 7°16' vers la paroi de la pointe 4 de la vis d'extrusion 3 dans le sens de la progression de la matière thermoplastique extrudée. La plaque à trous 5 présente également une couronne périphérique de douze trous de section circulaire et de 2 mm de diamètre. Le déplacement axial de la plaque à trous 5 est commandé par une crémaillère 8 et une vis sans fin 9, la position de cette plaque étant repérée par un ergot 11 coulissant dans une rainure 10 prévue dans le fourreau 1 du dispositif d'extrusion.

Une plaque à trous fixe conventionnelle généralement appelée « breaker » peut en outre être prévue entre la plaque à trous mobile 5 et la filière, cette plaque étant fixée au-delà de l'extrémité de la pointe 4 de la vis d'extrusion 3.

En agissant sur la vis sans fin 9, l'opérateur peut déplacer la plaque à trous 5 depuis la position représentée en traits pleins vers une position axiale quelconque telle que représentée en traits pointillés c'est-à-dire depuis une position où la pointe 4 de la vis d'extrusion 3 affleure la face aval 12 de la plaque à trous jusque dans une position où cette pointe 4 émerge de cette face. Ainsi qu'il apparaît sur la figure, en agissant de cette façon, on modifie la section de passage de la matière thermoplastique entre la pointe 4 de la vis d'extrusion 3 et la paroi interne 7 de l'évidement central 6 de la plaque à trous 5. L'opérateur peut donc agir directement sur le positionnement axial de la plaque à trous 5 durant l'extrusion et régler ce positionnement de façon à éliminer tout phénomène de « plate out ».

L'efficacité du dispositif d'extrusion conforme à l'invention est mis en évidence par les trois exemples d'application pratique qui vont suivre.

Dans ces trois exemples la même composition donnée ci-après en partie en poids a été mise en œuvre par extrusion

| | |
|---|---|
| polychlorure de vinyle (polymérisé en suspension) | 100 |
| sulfate tribasique de plomb | 2 |
| stéarate de dibutylplomb | 1,6 |
| stéarate de calcium | 0,4 |
| palmitate de cétyle | 0,75 |
| oxyde de titane | 5 |

Le mélange a été réalisé par malaxage à froid sur un malaxeur PAPENMEYER 10L.

Pour les trois exemples, on a utilisé une machine d'extrusion monovis MAILLEFER BM30 équipée d'une filière produisant une lanière de 20 mm de largeur sur 2 mm d'épaisseur. la première zone du fourreau a été maintenue à 175 °C, la seconde à 190 °C et la filière à 200 °C.

### Exemple 1

Cet exemple est donné à titre comparatif.

On a utilisé l'appareillage de façon conventionnelle en l'équipant d'une plaque à trous classique (« breaker ») disposée à 1 cm en aval de l'extrémité de la pointe de la vis d'extrusion. Après mise en régime de l'extrusion, on a poursuivi celle-ci durant 3 heures et, après arrêt, on a procédé au démontage de la tête d'extrusion. On a constaté la formation d'un dépôt collant sur l'extrémité de la pointe de la vis d'extrusion.

### Exemple 2

On a équipé l'extrudeuse d'un dispositif d'extrusion conforme à l'invention tel que représenté dans la figure du dessin annexé et on a réglé la position de la plaque à trous par l'intermédiaire de la vis sans fin 9 de façon telle que l'extrémité de la pointe de la vis d'extrusion affleure la face aval de la plaque à trous. Après mise en régime de l'extrusion, on a poursuivi celle-ci durant 3 heures et, après arrêt, on a procédé au démontage de la tête d'extrusion. On a constaté de nouveau la formation d'un dépôt sur la pointe de la vis d'extrusion. La position donnée à la plaque à trous ne correspondait donc pas à celle permettant l'élimination du phénomène de « plate out ».

### Exemple 3

On a utilisé le même appareillage qu'à l'exemple 2 mais en réglant la position de la plaque à trous de façon telle que l'extrémité de la pointe de la vis d'extrusion émerge de 3 mm de la face aval de la plaque à trous dans la direction axiale. Après mise en régime de l'extrusion, on a poursuivi celle-ci durant 3 heures puis, après arrêt, on a procédé au démontage de la tête d'extrusion. On n'a constaté aucune trace de dépôt sur la pointe de la vis d'extrusion. Il apparaît donc que cette fois la position de la plaque à trous du dispositif d'extrusion conforme à l'invention correspondait à une élimination du phénomène de « plate out » pour la résine extrudée.

### Revendications

1. Dispositif d'extrusion à vis de matières thermoplastiques comportant une plaque à trous pourvue d'un évidement central disposée concentriquement autour de la vis et déplaçable axialement par rapport à la vis caractérisé en ce que la plaque à trous (5) est disposée au niveau de la pointe conique de la vis d'extrusion (4) et ménage un canal annulaire entre l'évidement central de la plaque à trous (5) et la pointe conique de la vis.

2. Dispositif d'extrusion selon la revendication 1 caractérisé en ce que la plaque à trous (5) présente une couronne de trous.

3. Dispositif d'extrusion selon la revendication 2 caractérisé en ce que la pointe de la vis (4) à la forme générale d'un cône d'angle compris entre 20 et 160°.

4. Dispositif d'extrusion selon la revendication 3 caractérisé en ce que la paroi interne (7) de l'évidement central (6) est convergente par rapport à la paroi de la pointe de la vis (4) vers la pointe de la vis.

5. Dispositif d'extrusion selon la revendication 4 caractérisé en ce que l'angle de convergence est compris entre 10 et 85°.

6. Dispositif d'extrusion selon l'une quelconque des revendications 1 à 5 caractérisé en ce que la plaque à trous (5) est équipée de moyens (8), (9) permettant son déplacement axial, en cours d'extrusion, entre une position où l'extrémité de la pointe de la vis (4) d'extrusion affleure la face aval (12) de la plaque à trous (5) et une position où cette pointe (4) émerge de la face aval (12) de la plaque à trous (5) d'une distance axiale maximale égale au rayon de l'évidement central (6) de la plaque à trous (5) multiplié par la cotangente du demi-angle au sommet du cône formé par la pointe de la vis (4).

7. Dispositif d'extrusion selon l'une quelconque des revendications 1 à 7 caractérisé en ce que les dimensions et l'angle de l'évidement central (6) tronconique de la plaque à trous (5) sont tels que, quelle que soit la position occupée par cette plaque (5), la section minimale de passage pour la matière extrudée entre la paroi externe de la pointe de la vis (4) et la paroi interne (7) de cet évidement central (6) soit compris entre 5 et 300 % de la section minimale de passage assurée par l'ensemble des trous de la plaque à trous (5).

8. Dispositif d'extrusion selon l'une quelconque des revendications 1 à 8 caractérisé en ce que les axes longitudinaux des trous sont divergents par rapport à la paroi de la pointe de la vis (4) vers la pointe de la vis.

### Claims

1. Screw extruder for thermoplastics, incorporating a breaker plate provided with a central cavity and arranged concentrically around the screw and movable axially relative to the screw, characterised in that the breaker plate (5) is arranged in the region of the conical point of the extrusion screw (4) and provides an annular channel between the central cavity of the breaker plate (5) and the conical point of the screw.

2. Extruder according to Claim 1, characterised in that the breaker plate (5) has a ring of holes.

3. Extruder according to Claim 2, characterised in that the point of the screw (4) has the general shape of a cone with an angle of between 20 and 160°.

4. Extruder according to Claim 3, characterised in that the inner wall (7) of the central cavity (6) converges relative to the wall of the point of the screw (4) towards the point of the screw.

5. Extruder according to Claim 4, characterised in that the angle of convergence is between 10 and 85°.

6. Extruder according to any one of Claims 1 to 5, characterised in that the breaker plate (5) is equipped with means (8), (9) enabling its axial displacement, during extrusion, between a position in which the end of the point of the extrusion screw (4) is level with the downstream face (12) of the breaker plate (5) and a position in which this point (4) protrudes from the downstream face (12) of the breaker plate (5) for a maximum axial distance equal to the radius of the central cavity (6) of the breaker plate (5) multiplied by the cotangent of the half-angle at the apex of the cone formed by the point of the screw (4).

7. Extruder according to any one of Claims 1 to 7, characterised in that the dimensions and the angle of the frustoconical central cavity (6) of the breaker plate (5) are such that, whatever the position occupied by this plate (5), the minimum cross-section of flow for the extruded material between the outer wall of the point of the screw (4) and the inner wall (7) of this central cavity (6) is between 5 and 300 % of the minimum cross-section of flow provided by the set of holes in the breaker plate (5).

8. Extruder according to any one of Claims 1 to 8, characterised in that the longitudinal axes of the holes diverge relative to the wall of the point of the screw (4) towards the point of the screw.

**Patentansprüche**

1. Schneckenextruder für thermoplastische Materialien mit einer Lochplatte, die mit einer zentralen, konzentrisch zur Schnecke angeordneten Aussparung ausgestattet und axial zur Schnecke verschiebbar ist, dadurch gekennzeichnet, daß die Lochplatte (5) im Bereich der konischen Spitze (4) der Extrusionsschnecke angeordnet ist und einen Ringkanal zwischen der zentralen Aussparung der Lochplatte (5) und der konischen Spitze der Schnecke aufweist.

2. Extruder nach Anspruch 1, dadurch gekennzeichnet, daß die Lochplatte (5) einen Kranz von Löchern aufweist.

3. Extruder nach Anspruch 2, dadurch gekennzeichnet, daß die Schneckenspitze (4) die allgemeine Form eines konischen Winkels zwischen 20 und 160° aufweist.

4. Extruder nach Anspruch 3, dadurch gekennzeichnet, daß die Innenwand (7) der zentralen Aussparung (6) mit der Wand der Schneckenspitze (4) in Richtung auf die Spitze der Schnecke konvergiert.

5. Extruder nach Anspruch 4, dadurch gekennzeichnet, daß der Konvergenzwinkel zwischen 10 und 85° liegt.

6. Extruder nach irgendeinem der Ansprüche 1 bis 5, dadurch gekennzeichnet, daß die Lochplatte (5) mit Mitteln (8), (9) ausgestattet ist, die ihre axiale Verschiebung im Laufe der Extrusion zwischen einer Stellung, in der das Ende der Extrusionsschneckenspitze (4) mit der stromabwärtigen Fläche (12) der Lochplatte (5) fluchtet, und einer Stellung verschiebbar ist, in der die Schneckenspitze (4) aus der stromabwärtigen Fläche (12) der Lochplatte (5) um einen axialen Abstand vorsteht, der maximal gleich dem Radius der zentralen Aussparung (6) der Lochplatte (5) multipliziert mit dem Kotangens des halben von der Schneckenspitze (4) gebildeten Scheitelwinkels ist.

7. Extruder nach irgendeinem der Ansprüche 1 bis 6, dadurch gekennzeichnet, daß die Abmessungen und der Winkel der kegelstumpfförmigen zentralen Aussparung (6) der Lochplatte (5) solche sind, daß unabhängig von der von der Platte (5) eingenommenen Stellung der minimale Durchtrittsquerschnitt für das extrudierte Material zwischen der Außenwand der Schneckenspitze (4) und der Innenwand (7) dieser zentralen Aussparung (6) zwischen 5 und 300 % des von der Gesamtheit der Löcher der Lochplatte (5) gewährleisteten minimalen Durchtrittsquerschnitts liegt.

8. Extruder nach irgendeinem der Ansprüche 1 bis 7, dadurch gekennzeichnet, daß die Längsachsen der Löcher mit der Wand der Schneckenspitze (4) in Richtung auf die Spitze der Schnecke divergieren.